(19) Europäisches Patentamt

European Patent Office

Office européen des brevets

(11) Veröffentlichungsnummer: **0 318 674 B1**

(12) **EUROPÄISCHE PATENTSCHRIFT**

(45) Veröffentlichungstag der Patentschrift: **26.02.92**

(21) Anmeldenummer: **88116451.1**

(22) Anmeldetag: **05.10.88**

(51) Int. Cl.⁵: **B01D 53/34**, C05C 1/00, C05C 3/00

(54) **Verfahren zum Entfernen von sauren Komponenten und Stickoxiden aus Abgasen industrieller Feuerungsanlagen.**

(30) Priorität: **19.11.87 DE 3739162**

(43) Veröffentlichungstag der Anmeldung:
**07.06.89 Patentblatt 89/23**

(45) Bekanntmachung des Hinweises auf die
Patenterteilung:
**26.02.92 Patentblatt 92/09**

(84) Benannte Vertragsstaaten:
**AT BE CH DE FR GB IT LI LU NL SE**

(56) Entgegenhaltungen:
**EP-A- 0 232 976**
**EP-A- 0 268 094**
**US-A- 4 097 349**
**US-A- 4 351 810**

(73) Patentinhaber: **Krupp Koppers GmbH**
**Altendorfer Strasse 120**
**W-4300 Essen 1(DE)**

(72) Erfinder: **Firnhaber, Bernhard, Dr.**
**Pelmanstrasse 40**
**W-4300 Essen 1(DE)**
Erfinder: **Schmid, Karl, Dr.**
**Hohe Buchen 14 a**
**W-4300 Essen 1(DE)**
Erfinder: **Starck, Cort**
**Braunfelder Allee 68**
**W-4270 Dorsten 11(DE)**
Erfinder: **Gosch, Hans-Werner**
**Einigkeitstrasse 45**
**W-4300 Essen 1(DE)**
Erfinder: **Wetzel, Rolf, Dr.**
**Anemonenweg 22**
**W-5628 Heiligenhaus(DE)**
Erfinder: **Schulte, Wolfgang**
**Dürer Weg 16**
**W-4019 Monheim(DE)**
Erfinder: **Wenderoth, Richard**
**Krawehlstrasse 40**
**W-4300 Essen 1(DE)**

**Beschreibung**

Die Erfindung betrifft ein Verfahren zum Entfernen von sauren Komponenten und Stickoxiden aus den Abgasen industrieller Feuerungsanlagen, bei dem die Stickoxide oxidiert und die Abgase einer zweistufigen Absorption unter Verwendung von wäßrigen Ammoniumsalzlösungen als Absorptionsflüssigkeit unterworfen werden, wobei die in der Absorptionsflüssigkeit enthaltenen Ammoniumsalze durch Einsatz von wäßrigen Ammoniaklösungen im Verfahren selbst erzeugt und im Anschluß an die Gasbehandlung durch Eindampfen der Absorptionsflüssigkeit abgeschieden werden.

In jüngster Zeit sind eine Vielzahl von Verfahren bekannt geworden, die dem Zweck dienen, die Umweltbelastung, die durch die Abgase industrieller Feuerungsanlagen, insbesondere die Abgase aus kohle- und/oder ölbefeuerten Kraftwerksanlagen, hervorgerufen wird, durch geeignete Maßnahmen zu verringern. In diesem Zusammenhang sind in der Literatur zahlreiche Vorschläge zur Simultanabscheidung von $SO_x$ und $NO_x$ aus diesen Abgasen veröffentlicht worden. Diese Verfahren verwenden hierbei sowohl Wäschen als auch trockene Methoden zur Abscheidung dieser Komponenten. Ein Verfahren der gattungsgemäßen Art wird beispielsweise in "Chemie-Ingenieur-Technik", 57 (1985), Seiten 720 - 722, beschrieben. Bei diesem als Walther-Simultan-Verfahren bekannten Verfahren werden die Abgase nach Ausnutzen eines Teils des Wärmeinhaltes zur Sprühtrocknung der Produktsalze zunächst einer Entschwefelung mit wäßriger Ammoniaklösung zugeführt. In dem entschwefelten Gas werden die Stickoxide durch Zugabe von Ozon oder ozonisierter Luft auf eine höhere Oxidationsstufe gebracht. Die höher oxidierten Stickoxide werden dann in einer zweiten Waschstufe mit wäßriger Ammoniaklösung ausgewaschen. Die konzentrierten Salzlösungen aus beiden Waschstufen werden mit Luft nachoxidiert, damit nur noch Sulfat und Nitrat vorliegen, und danach gemeinsam der Sprühtrocknung zugeführt.

Erfahrungen mit diesem Verfahren im großtechnischen Einsatz haben gezeigt, daß die Entschwefelung nur bei einem $p_H$-Wert von 5 und höher zu den in der Praxis geforderten Entschwefelungsgraden führt. Dieser $p_H$-Wert führte jedoch zu einem erhöhten $NH_3$-Partialdruck, durch den die Bildung von Aerosolen der Ammoniumsalze begünstigt wird. Diese Aerosole, die in Form eines sogen. weißen Rauches aus dem Kamin hinter der Abgaswäsche austraten, stellen aber ebenfalls eine Umweltbelastung dar, die unterbunden werden muß. Zwar gelingt es durch den Einbau von speziellen Filtern, diese Aerosole abzuscheiden. Dies ist jedoch keine befriedigende Lösung des Problems, weil einerseits der Einbau eines hierfür geeigneten Filtersystems erhebliche Investitionskosten verursacht und andererseits durch hohe Druckverluste im Filter die Betriebskosten der Anlage in unerwünschtem Maße erhöht werden. Die Stickoxidauswaschung gelingt bei diesem Verfahren im erforderlichen Umfang nur, wenn die Oxidation der Stickoxide bis zum Anhydrid der Salpetersäure, $N_2O_5$, erfolgt ist. Um diesen Oxidationsgrad zu erreichen, wird bei Verwendung von Ozon als Oxidationsmittel ein Molverhältnis Ozon zu $NO_x$ im Abgas von mindestens 1,5 benötigt. Dieser hohe Ozonbedarf bedeutet jedoch hohe Betriebs- und Investitionskosten.

Der Erfindung liegt deshalb die Aufgabe zugrunde, das Verfahren der eingangs genannten Art dahingehend weiterzuentwickeln, daß die vorstehend genannten Nachteile vermieden werden. Das erfindungsgemäße Verfahren soll sich dabei insbesondere durch einen geringen Investitions- und Betriebskostenaufwand auszeichnen, wobei der Gehalt an sauren Komponenten und Stickoxiden in den Abgasen selbstverständlich soweit herabgesetzt werden soll, daß die behördlichen Auflagen im vollen Umfange erfüllt werden können.

Das der Lösung dieser Aufgabe dienende Verfahren der eingangs genannten Art ist erfindungsgemäß gekennzeichnet durch die Anwendung folgender Verfahrensschritte:

a) Das zu behandelnde Gas wird in das Verfahren mit einem Sauerstoffgehalt eingeführt, der mindestens 0,5 Vol-% beträgt;

b) die im Gas enthaltenen Stickoxide werden mit dem im Gas enthaltenen Sauerstoff vor dem Eintritt des Gases in die erste Absorptionsstufe bei einer Gastemperatur von 300 bis 900 °C oxidiert, wobei dem Gas organische Verbindungen zugesetzt werden, die unter den gegebenen Temperaturbedingungen ganz oder teilweise in Radikale zerfallen;

c) in beiden Absorptionsstufen wird mit Absorptionsflüssigkeiten gearbeitet, deren $p_H$-Wert kleiner als 5 ist;

d) in dem der zweiten Absorptionsstufe zugeführten Gas wird das Molverhältnis von $NO_2$ zu $SO_2$ so eingestellt, daß es im Bereich zwischen 0,1 und 0,5 liegt; und

e) die in den beiden Absorptionsstufen erzeugten Salzlösungen werden vor dem Eindampfen mit wäßriger Ammoniaklösung neutralisiert.

Das heißt, das erfindungsgemäße Verfahren sieht eine Umsetzung der im Rauchgas enthaltenen Stickoxide mit dem im Gas ebenfalls enthaltenen Sauerstoff gemäß der Reaktionsgleichung

$$2 \ NO \ + \ O_2 \rightarrow 2 \ NO_2$$

vor. Deshalb ist es beim erfindungsgemäßen Verfahren erforderlich, daß das zu behandelnde Rauchgas einen Sauerstoffgehalt von mindestens 0,5 Vol.-% aufweist. Sofern das Gas nicht von vornherein einen derartigen Sauerstoffgehalt aufweist, muß durch Zugabe von Sauerstoff und/oder Luft für eine Einhaltung dieses Wertes gesorgt werden. Diese Oxidationsreaktion verläuft allerdings unter den im Rauchgasweg normalerweise herrschenden Bedingungen extrem langsam. Es wurde jedoch gefunden, daß die Reaktionsgeschwindigkeit über eine Radikalreaktion so weit erhöht werden kann, daß die Reaktion in den technisch vorgegebenen Zeitspannen durchgeführt werden kann. Die Radikalreaktion erfolgt erfindungsgemäß durch Zugabe von organischen Verbindungen, insbesondere von Alkanen oder Alkoholen, in das Rauchgas bei einer Temperatur, bei der die jeweilige Substanz unter Radikalbildung zerfällt. Beispiele für verschiedene radikalbildende Substanzen und deren effektiven Temperaturbereich sind nachfolgender Tabelle zu entnehmen:

| Substanz | Effektiver Temepraturbereich °C für die Radikalbildung |
|----------|--------------------------------------------------------|
| Methan | 600 - 750 |
| Methanol | 550 - 750 |
| n-Hexan | 300 - 400 |

Als besonders wirksam für die Beschleunigung der NO-Oxidation durch Sauerstoff hat sich die Zudosierung von Methanol in das Rauchgas bei Temperaturen zwischen 600 und 700 °C erwiesen.

Die Menge der dem Gas als Radikalbildner zugesetzten organischen Verbindungen richtet sich natürlich nach der jeweils verwendeten Substanz und ist abhängig von der Zahl der in ihr enthaltenen C-Atome. Hierbei wird man den Zusatz der organischen Verbindungen zum Gas jeweils so bemessen, daß das Molverhältnis $C/NO_x$ gleich oder kleiner 10, vorzugsweise 1,0 bis 4,0, ist. Bei Verwendung von Methanol wird man mit einem Molverhältnis $Methanol/NO_x$ arbeiten, das gleich oder kleiner 6, vorzugsweise 1,5 bis 2,5, ist.

Die Oxidation der Stickoxide ($NO_x$) wird dabei bis zu einer Oxidationsstufe von x = 1,5 bis 2,0, vorzugsweise x = 1,8 bis 2,0, durchgeführt. Das bedeutet, daß ein wesentlicher Teil des NO, das im Rauchgas überwiegt, zu $NO_2$ oxidiert wird. Sofern die Oxidation der Stickoxide mit Hilfe der vorstehend beschriebenen Radikalreaktion nicht ausreicht, um den gewünschten Oxidationsgrad zu erreichen, so kann eine zusätzliche Nachoxidation mit Hilfe von Ozon und/oder ozonisierter Luft durchgeführt werden. Hierbei wird diese Nachoxidation bei einer Gastemperatur von 30 bis 130 °C in der Weise durchgeführt, daß das Ozon und/oder die ozonisierte Luft dem Gas unmittelbar vor dessen Eintritt in den Wascher der ersten Absorptionsstufe zugesetzt werden. Die hierbei benötigten Ozonmengen liegen selbstverständlich wesentlich unter den Werten, die für eine ausschließlich mit Ozon und/oder ozonisierter Luft durchgeführte Stickoxidoxidation erforderlich sind.

Bei der Durchführung des erfindungsgemäßen Verfahrens reagiert das im Rauchgas enthaltene $SO_2$ mit der in den Waschern beider Absorptionsstufen umlaufenden wäßrigen Ammoniumsalzlösung zunächst unter Bildung von Ammoniumsulfit bzw. -bisulfit. Die hierbei in der Absorptionsflüssigkeit vorhandenen Sulfitionen bewirken ihrerseits eine Reduktion des Nitrits zu Stickstoff, wobei die Sulfitionen zu Sulfationen oxidiert werden. Bisher war es jedoch nicht möglich, diese Reaktionen zur gleichzeitigen Absorption von $NO_x$ und $SO_2$ aus Rauchgasen zu nutzen, weil die für eine Reduktion des Nitrits im ausreichenden Umfange und damit für eine ausreichende $NO_x$-Auswaschung aus dem Rauchgas erforderlichen Sulfitionen nicht im ausreichenden Maße zur Verfügung standen. Dies ist dadurch zu erklären, daß unter dem katalytischen Einfluß von $NO_2$ die Oxidation der Sulfitionen mit dem Sauerstoff des Rauchgases gemäß der Reaktionsgleichung

$$2 \ SO_3^{2-} \ + \ O_2 \rightarrow 2 \ SO_4^{2-}$$

mit höherer Reaktionsgeschwindigkeit abläuft als die Nitritreduktion. Erfindungsgemäß ist es jedoch gelungen, durch Einstellung des $p_H$-Wertes der Absorptionsflüssigkeit in der ersten Absorptionsstufe auf einen Wert von < 5, vorzugsweise < 3, diese Oxidationsreaktion soweit zurückzudrängen, daß die gleichzeitige Absorption von $NO_x$ und $SO_2$ zu einer ausreichenden $NO_x$-Entfernung führt. Ein äquimolares Gemisch von NO und $NO_2$ reagiert dabei gemäß

$$N_2O_3 \; + \; 3SO_2 \; + \; 3H_2O \rightarrow N2 \; + \; 3H_2SO_4$$

$NO_2$ bzw. das im Gleichgewicht vorhandene $N_2O_4$ reagiert gemäß

$$N_2O_4 \; + \; 4SO_2 \; + \; 4H_2O \rightarrow N_2 \; + \; 4H_2SO_4$$
$$2N_2O_4 \; + \; 3SO_2 \; + \; 4H_2O \rightarrow N_2 \; + \; 3H_2SO_4 \; + \; 2HNO_3 \; .$$

$N_2O_4$ weist gegenüber $N_2O_3$ eine höhere Löslichkeit in wäßrigen Lösungen auf. Deshalb ist die $NO_x$-Auswaschung gemäß obigen Reaktionen schneller und vollständiger bei hohen $NO_2$/NO-Molverhältnissen. Für das erfindungsgemäße Verfahren wird daher eine $NO_x$-Oxidationsstufe von x = 1,8 bis 2,0 bevorzugt.

In Abhängigkeit von der $NO_x$- und $SO_2$-Konzentration sowie vom $NO_x$-Oxidationsgrad erfolgt in der ersten Absorptionsstufe eine mehr oder weniger vollständige $SO_2$-Auswaschung aus dem Rauchgas. Die zweite Absorptionsstufe ist erforderlich, um die $SO_2$-Konzentration auf den geforderten Grenzwert zu reduzieren. Diese $SO_2$-Restauswaschung erfolgt erfindungsgemäß unter dem katalytischen Einfluß von $NO_2$, weshalb das Molverhältnis von $NO_2$ zu $SO_2$ im Gas in dieser Waschstufe so eingestellt wird, daß es im Bereich zwischen 0,01 und o,5, vorzugsweise zwischen 0,1 und 0,2, liegt. Zu diesem Zweck kann ein kleiner Teilstrom des oxidierten Rauchgases vor dem Wascher der ersten Absorptionsstufe abgezweigt und dem Gas im Wascher der zweiten Absorptionsstufe zugesetzt werden. Der $p_H$-Wert der Absorptionsflüssigkeit in dieser Stufe soll wiederum < 5 sein. Als besonders günstig hat sich ein $p_H$-Wert von 4,5 erwiesen. Bei diesem $p_H$-Wert wird ein guter Auswaschungsgrad ohne Aerosolbildung erreicht.

Die Einstellung der $p_H$-Werte der Absorptionsflüssigkeit in beiden Absorptionsstufen erfolgt durch Zugabe von wäßrigen Ammoniaklösungen dergestalt, daß nach Neutralisation der Lösungen eine 50 - 98 %-ige Sättigung der Lösungen durch Ammoniumsalze erreicht wird. Die aus den Waschern ablaufenden beladenen Lösungen enthalten neben Ammoniumsulfat und -nitrat Ammoniumsalze saurer Spurenkomponenten im Rauchgas, wie Chlorid und Fluorid, sowie entsprechend dem $p_H$-Wert Ammoniumbisulfat, Schwefelsaure und Salpetersäure. Sie werden einem gemeinsamen Neutralisationsbehälter zugeführt. Die Neutralisation erfolgt ebenfalls durch Zugabe von wäßriger Ammoniaklösung.

Eine Nachoxidation ist nicht erforderlich, so daß die neutralisierte Lösung sofort der Eindampfung und Trocknung zugeführt werden kann. Diese kann auf verschiedene Weise durchgeführt werden, beispielsweise in einem Wirbelbett-Trockner oder Sprühtrockner bzw. Einspritzverdampfer. Sofern letzteres der Fall ist, kann ein Teilstrom des heißen Gases vor dem Eintritt in die erste Absorptionsstufe abgezweigt und zur Eindampfung der Absorptionsflüssigkeit in den Sprühtrockner eingeleitet werden. Anschließend wird dieser Teilstrom, der in der Größenordnung von ca. 10 Vol.% liegt, mit dem übrigen Gas vor dessen Eintritt in die erste Absorptionsstufe wiedervereinigt. Im Anschluß an die Eindampfung und Trocknung werden die aus dem Verfahren abgezogenen Ammoniumsalze pelletiert oder granuliert. Sie stellen einen verkaufsfähigen Dünger dar.

Weitere Einzelheiten des erfindungsgemäßen Verfahrens sollen nachfolgend an Hand der in den Abbildungen dargestellten Fließschemata erläutert werden.
Hierbei zeigen:

Fig. 1    ein Fließschema des erfindungsgemäßen Verfahrens, wobei für die Eindampfung der Absorptionsflüssigkeit ein Sprühtrockner zur Anwendung gelangt, durch den ein Teilstrom des heißen Rauchgases geleitet wird,
und

Fig. 2    ein Fließschema des erfindungsgemäßen Verfahrens, wobei ein Trockner beliebiger Bauart zur Anwendung gelangt.

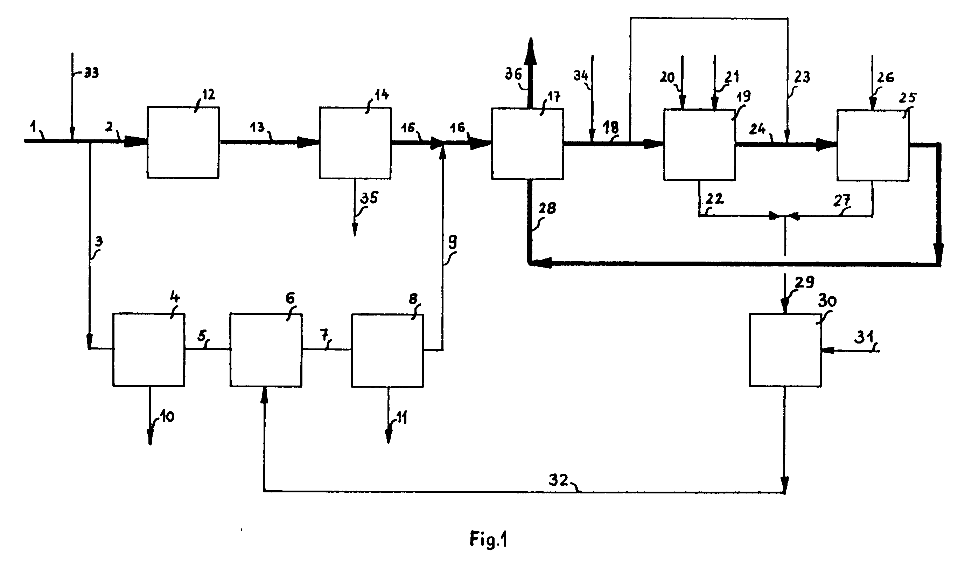

Bei der Darstellung in Fig. 1 ist mit 1 eine Abgasleitung gekennzeichnet, die mit einer beliebigen industriellen Verbrennungsvorrichtung verbunden ist. In das Abgas wird durch leitung 33 ein Radikalbildner in der Menge zudosiert, daß der größte Teil des NO im Rauchgas zu $NO_2$ oxidiert wird. Vor dem Luftvorwärmer 12 wird die Gasmenge geteilt. Etwa 10 Vol.-% des Abgases werden über Leitung 3 einer Heißgasentstaubung 4 zugeführt und gelangen dann über Leitung 5 in den Trockner 6, in den über Leitung 32 auch die im Verfahren gewonnene Ammonsalzlösung eingespeist wird. Bei dem Trockner 6 handelt es sich in diesem Falle um einen Sprühtrockner bzw. Einspritzverdampfer. Der Staub aus der Entstaubung 4 wird über die Leitung 10 abgezogen. Das die getrockneten Salze enthaltene Gas wird über Leitung 7 dem Abscheider 8 zugeführt. Die sprühgetrockneten Salze werden über Leitung 11 abgezogen und in bekannter Weise zu einem handelsüblichen Produkt pelletiert oder granuliert. Das von Ammonsalzen befreite Gas wird über Leitung 9 der Hauptmenge des Abgases in Leitung 15 zugemischt. Diese Hauptmenge des Abgases wird über Leitung 2, den Luftvorwärmer 12 und die Leitung 13 einem Elektrofilter 14 zugeführt, wo das Abgas entstaubt und der Staub über die Leitung 35 abgezogen wird. Das entstaubte Abgas wird über

4

Leitung 15 weitergeführt und nach Vereinigung mit dem Zweigstrom aus Leitung 9 über Leitung 16 einem Wärmetauscher 17 zugeführt. Nach dem Wärmetauscher 17 wird erfindungsgemäß das Abgas über Leitung 18 einer ersten Absorptionsstufe 19 zugeführt. In die Leitung 18 kann über Leitung 34 Ozon und/oder ozonisierte Luft zudosiert werden, wenn an dieser Stelle zusätzlich oder alternativ zur Radikaloxidation NO zu $NO_2$ oxidiert werden soll.

Im Wascher der ersten Absorptionsstufe 19 werden $NO_3$, der größte Teil des $SO_2$ sowie andere saure Komponenten im Abgas, wie $SO_3$, $HCl$, $HF$ u.a., durch eine im Kreislauf geführte, Ammoniumsalze enthaltene wäßrige Lösung ausgewaschen. Zur Einhaltung des $p_H$-Wertes der Waschlösung wird dem Wascher über Leitung 20 wäßrige Ammoniaklösung zugeführt. Zusätzlich wird über Leitung 21 Wasser zugeführt, um die durch Verdampfen ausgetragene Wassermenge zu ersetzen. Die erzeugte Menge Salzlösung wird über Leitung 22 kontinuierlich abgezogen.

Das die erste Absorptionsstufe 19 verlassende Abgas wird über Leitung 24 der zweiten Absorptionsstufe 25 zugeführt. In dieser wird das restliche $SO_2$ bei Anwesenheit von katalytisch wirkenden $NO_2$-Konzentrationen ausgewaschen. Die erforderliche $NO_2$-Konzentration wird entweder durch den Auswaschungsgrad in der ersten Absorptionsstufe 19 oder durch Umfahren dieser Stufe von einem Teil des $NO_x$-haltigen Gases über Leitung 23 eingestellt. Die Waschlösung im Wascher der zweiten Absorptionsstufe 25 wird ebenfalls durch Zugabe von wäßriger Ammoniaklösung über Leitung 26 auf konstantem $p_H$-Wert gehalten.Die erzeugte Salzlösung wird über Leitung 27 abgezogen.

Das die zweite Absorptionsstufe 25 verlassende Abgas gelangt über Leitung 28 zum Wärmetauscher 17 und von dort über Leitung 36 zum Kamin. Eine Aerosolabscheidung ist in diesem Falle nicht erforderlich und daher auch nicht vorgesehen.

Die in den beiden Waschstufen erzeugten Salzlösungen werden in Leitung 29 vereinigt und dem Neutralisationsbehälter 30 zugeführt, wo die Säuren durch Zugabe von wäßriger Ammoniaklösung über Leitung 31 in Ammoniumsalze überführt werden. Die neutralisierte Lösung gelangt über Leitung 32 zum Trockner 6. Sie enthält nur Spuren von Ammoniumnitrit und -sulfit und benötigt zur Erzeugung eines verkäuflichen Düngemittels keine Nachoxidation.

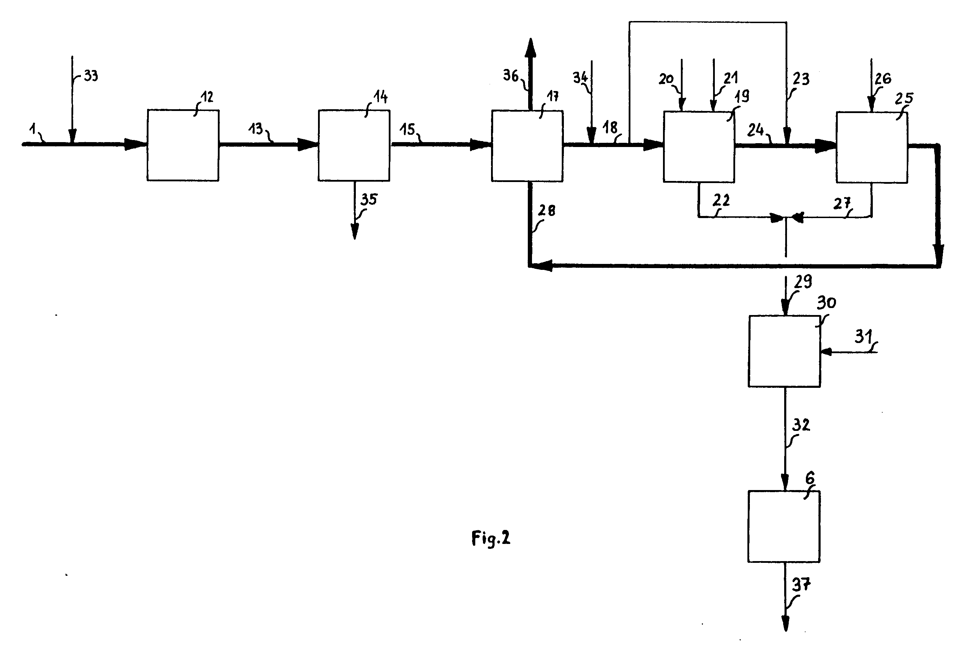

Das in Fig. 2 dargestellte Verfahrensschema entspricht im wesentlichen dem Verfahrensschema in Fig. 1, wobei übereinstimmende Bezugszeichen die gleiche Bedeutung haben. Im Unterschied zum Verfahrensablauf nach Fig. 1 ist hier allerdings für den Trockner 6 kein Sprühtrockner, sondern eine beliebige andere Trocknerkonstruktion vorgesehen. Das zu behandelnde Abgas wird deshalb nicht in zwei Teilströme aufgeteilt, sondern in seiner Gesamtheit über die Leitung 1 in den Luftvorwärmer 12 sowie die nachgeschalteten Anlagen zur Gasbehandlung eingeleitet. Der Trockner 6 befindet sich dabei unmittelbar hinter dem Neutralisationsbehälter 30. Die im Trockner 6 anfallenden Salze werden über die Leitung 37 der Pelletierung oder Granulierung zugeführt.

Abschließend sollen die Vorteile des erfindungsgemäßen Verfahrens noch durch das nachfolgende Ausführungsbeispiel belegt werden, das die Behandlung des Abgases aus einem Kraftwerk betrifft.

In der kohlegefeuerten Kesselanlage des Kraftwerkes entstehen dabei 500 000 $m^3$/h Abgas mit einem $SO_2$-Gehalt von 2600 $mg/m^3$ und einem $NO_x$-Gehalt von 850 $mg/m^3$ (als $NO_2$ gerechnet) und einem $O_2$-Gehalt von 5,3 Vol.-%. Im Abhitzesystem des Kraftwerkskessels werden bei einer Abgastemperatur von 650 °C 530 kg/h Methanol in den Gasstrom eingedüst. Die hierbei eintretende Radikalreaktion bewirkt die Oxidation von NO zu $NO_2$ sowie eine Umsetzung von $NO_x$ zu $N_2$ von ca. 20 %.

Nach Entstaubung und Wärmeaustausch wird das Abgas der ersten Absorptionsstufe 19 zugeführt, in der die im Kreislauf geführte Absorptionsflüssigkeit durch Zugabe von wäßriger Ammoniaklösung auf einem $p_H$-Wert von 1,5 gehalten wird. Dazu werden 140 kg/h Ammoniak benötigt.

Das Abgas aus der ersten Absorptionsstufe 19 enthält noch 1760 $mg/m^3$ $SO_2$ und 170 $mg/m^3$ $NO_x$. Es wird in der zweiten Absorptionsstufe 25 bei einem $p_H$-Wert der Waschlösung von 4,5 weiter gereinigt. Dieser Stufe werden 420 kg/h $NH_3$ in wäßriger Lösung zugesetzt.

Das die zweite Absorptionsstufe 25 verlassende Abgas wird ohne weitere Behandlung über den Wärmetauscher 17 zum Kamin geleitet. Sein Schadstoffgehalt liegt mit 130 $mg/m^3$ $NO_x$ und 190 $mg/m^3$ $SO_2$ unterhalb der gesetzlich vorgeschriebenen Grenzwerte. Eine Aerosolbildung beim Austritt des Gases aus dem Kamin trat nicht auf.

Die aus beiden Absorptionsstufen abgezogenen Salzlösungen werden im Neutralisierungsbehälter 30 durch Zugabe von 120 kg/h Ammoniak neutralisiert und in den Trockner 6 eingespeist. Aus diesem werden stündlich 5124 kg trockener Salze abgezogen. Der Gehalt an chemisch gebundenem Stickstoff dieser Produktsalze beträgt 21,3 Gew.-%.

**Patentansprüche**

1. Verfahren zum Entfernen von sauren Komponenten und Stickoxiden aus den Abgasen industrieller Feuerungsanlagen, bei dem die Stickoxide oxidiert und die Abgase einer zweistufigen Absorption unter Verwendung von wäßrigen Ammoniumsalzlösungen als Absorptionsflüssigkeit unterworfen werden, wobei die in der Absorptionsflüssigkeit enthaltenen Ammoniumsalze durch den Einsatz von wäßrigen Ammoniaklösungen im Verfahren selbst erzeugt und im Anschluß an die Gasbehandlung durch Eindampfen der Absorptionsflüssigkeit abgeschieden werden, gekennzeichnet durch die Anwendung folgender Verfahrensschritte:

    a) Das zu behandelnde Gas wird in das Verfahren mit einem Sauerstoffgehalteingeführt, der mindestens 0,5 Vol.-% beträgt;
    b) die im Gas enthaltenen Stickoxide werden mit dem im Gas enthaltenen Sauerstoff vor dem Eintritt des Gases in die erste Absorptionsstufe bei einer Gastemperatur von 300 bis 900 °C oxidiert, wobei dem Gas organische Verbindungen zugesetzt werden, die unter den gegebenen Temperaturbedingungen ganz oder teilweise in Radikale zerfallen;
    c) in beiden Absorptionsstufen wird mit Absorptionsflüssigkeiten gearbeitet, deren $p_H$-Wert kleiner als 5 ist;
    d) in dem der zweiten Absorptionsstufe zugeführten Gas wird das Molverhältnis von $NO_2$ zu $SO_2$ so eingestellt, daß es im Bereich zwischen 0,01 und 0,5 liegt, und
    e) die in den beiden Absorptionsstufen erzeugten Salzlösungen werden vor dem Eindampfen mit wäßriger Ammoniaklösung neutralisiert.

2. Verfahren nach Anspruch 1, dadurch gekennzeichnet, daß die Oxidation der Stickoxide ($NO_3$) bis zu einer Oxidationsstufe von x = 1,5 bis 2,0, vorzugsweise x = 1,8 bis 2,0, durchgeführt wird.

3. Verfahren nach den Ansprüchen 1 und 2, dadurch gekennzeichnet, daß dem Gas für die Oxidation der Stickoxide organische Verbindungen als Radikalbildner in einer solchen Menge zugesetzt werden, daß das Molverhältnis $C/NO_x$ gleich oder kleiner 10, vorzugsweise 1,0 bis 4,0, ist.

4. Verfahren nach den Ansprüchen 1 bis 3, dadurch gekennzeichnet, daß dem Gas für die Oxidation der Stickoxide vorzugsweise Methanol als Radikalbildner in einer solchen Menge zugesetzt wird, daß das Molverhältnis Methanol/$NO_x$ gleich oder kleiner 6, vorzugsweise 1,5 bis 2,5, ist.

5. Verfahren nach den Ansprüchen 1 bis 4, dadurch gekennzeichnet, daß dem Gas für die Oxidation der Stickoxide zusätzlich zu den organischen Verbindungen Ozon und/oder ozonisierte Luft zugesetzt wird, wobei diese Oxidationsmittel dem Gas getrennt von den organischen Verbindungen bei einer Gastemperatur von 30 bis 130 °C zugesetzt werden.

6. Verfahren nach den Ansprüchen 1 bis 5, dadurch gekennzeichnet, daß in der ersten Absorptionsstufe vorzugsweise mit Absorptionsflüssigkeiten gearbeitet wird, deren $p_H$-Wert kleiner als 3 ist.

7. Verfahren nach den Ansprüchen 1 bis 6, dadurch gekennzeichnet, daß in der zweiten Absorptionsstufe vorzugsweise mit Absorptionsflüssigkeiten gearbeitet wird, deren $p_H$-Wert bei 4,5 liegt.

8. Verfahren nach den Ansprüchen 1 bis 7, dadurch gekennzeichnet, daß die aus dem Verfahren abgezogenen Ammoniumsalze pelletiert oder granuliert werden.

**Claims**

1. Process for removing acid components and nitrogen oxides from the waste gases of industrial combustion installations, in which the nitrogen oxides are oxidised and the waste gases are subjected to a two-stage absorption using agueous ammonium salt solutions as absorption liquid, the ammonium salts present in the absorption liquid being produced in the process itself by the use of aqueous ammonia solutions and being precipitated after the gas treatment by evaporation of the absorption liquid, characterised by the application of the following process steps:
    a) the gas to be treated is introduced into the process at an oxygen content of at least 0.5% by volume,
    b) the nitrogen oxides present in the gas are oxidised, before the gas enters the first absorption stage, at a gas temperature of 300 to 900°C by the oxygen present in the gas, organic compounds being added to the gas, which decompose wholly or partially into free radicals under the prevailing temperature conditions,

c) absorption liquids of a pH below 5 are used in both absorption stages,

d) the $NO_2/SO_2$ molar ratio in the gas fed to the second absorption stage is adjusted such that it is in the range between 0.01 and 0.5, and

e) the salt solutions produced in the two absorption stages are neutralised with aqueous ammonia solution before the evaporation.

2. Process according to Claim 1, characterised in that the oxidation of the nitrogen oxides ($NO_3$) (sic) is taken up to an oxidation level of x = 1.5 to 2.0, preferably x = 1.8 to 2.0.

3. Process according to Claims 1 and 2, characterised in that such a quantity of organic compounds as free-radical formers is added to the gas for the oxidation of the nitrogen oxides that the $C/NO_x$ molar ratio is equal to or less than 10, preferably 1.0 to 4.0.

4. Process according to Claims 1 to 3, characterised in that such a quantity of preferably methanol as the free-radical former is added to the gas for the oxidation of the nitrogen oxides that the methanol/$NO_x$ molar ratio is equal to or less than 6, preferably 1.5 to 2.5.

5. Process according to Claims 1 to 4, characterised in that ozone and/or ozonised air is added to the gas in addition to the organic compounds for the oxidation of the nitrogen oxides, these oxidising agents being added to the gas separately from the organic compounds at a gas temperature of from 30 to 130°C.

6. Process according to Claims 1 to 5, characterised in that absorption liquids of a pH below 3 are preferably used in the first absorption stage.

7. Process according to Claims 1 to 6, characterised in that absorption liquids of a pH below 4.5 are preferably used in the second absorption stage.

8. Process according to Claims 1 to 7, characterised in that the ammonium salts taken off from the process are pelleted or granulated.

**Revendications**

1. Procédé pour éliminer des composantes acides et des oxydes d'azote dans les gaz brûlés provenant d'installations industrielles de combustion, par lequel les oxydes d'azote sont oxydés et les gaz brûlés soumis à une absorption en deux étages moyennant utilisation d'un liquide d'absorption sous la forme de solutions aqueuses de sels d'ammonium, les sels d'ammonium contenus dans le liquide d'absorption étant produits dans le cadre du procédé lui-même par la mise en oeuvre de solutions aqueuses d'ammoniac, puis précipités à la suite du traitement des gaz par une concentration par évaporation du liquide d'absorption,

caractérisé par l'application des phases de procédé suivantes :

a) Le gaz à traiter est introduit dans le procédé avec une teneur en oxygène faisant au minimum 0,5 % en volume ;

b) les oxydes d'azote contenus dans le gaz sont oxydés avant l'admission du gaz dans le premier étage d'absorption à une température du gaz de 300 à 900°C par l'oxygène contenu dans le gaz, tandis que des composés organiques sont ajoutés au gaz, qui se décomposent en tout ou partie en radicaux dans les conditions de température indiquées ;

c) le travail dans les deux étages d'absorption est effectué avec des liquides d'absorption dont le pH est inférieur à 5 ;

d) les proportions moléculaires de $NO_2$ et de $SO_2$ dans le gaz acheminé au second étage d'absorption sont ajustées pour se situer entre 0,1 et 0,5 ; et

e) les solutions de sels engendrées dans les deux étages d'absorption sont neutralisées avec une solution aqueuse d'ammoniac avant d'être concentrées par évaporation.

2. Procédé suivant la revendication 1,
caractérisé par le fait que l'oxydation des oxydes d'azote (NO$_3$) est effectuée jusqu'à un niveau d'oxydation X d'une valeur de 1,5 à 2,0 de préférence de 1,8 à 2,0.

3. Procédé suivant les revendications 1 et 2,
caractérisé par le fait qu'on ajoute au gaz, comme génératrices de radicaux, une quantité de substances organiques telle que les proportions moléculaires C/NO$_x$ soient égales ou inférieures à 10, de préférence d'une valeur de 1,0 à 4,0.

4. Procédé suivant les revendications 1 à 3,
caractérisé par le fait que l'agent générateur de radicaux ajouté au gaz pour l'oxydation des oxydes d'azote est de préférence du méthanol en une quantité telle que les proportions moléculaires méthanol/NO$_x$ soient égales ou inférieures à 6, de préférence d'une valeur de 1,5 à 2,5.

5. Procédé suivant les revendications 1 à 4,
caractérisé par le fait que qu'on ajoute aux gaz, pour l'oxydation des oxydes d'azote, en plus des substances organiques, de l'ozone et/ou de l'air enrichi d'ozone, ces agents oxydants étant ajoutés aux gaz séparément des composés organiques, à une température de gaz de 30 à 130°C.

6. Procédé suivant les revendications 1 à 5,
caractérisé par le fait que dans le premier étage d'absorption, les opérations sont effectuées de préférence avec des liquides d'absorption dont le pH est inférieur à 3.

7. Procédé suivant les revendications 1 à 6,
caractérisé par le fait que dans le second étage d'absorption, les opérations sont effectuées de préférence avec des liquides d'absorption dont le pH se situe autour de 4,5.

8. Procédé suivant les revendications 1 à 7,
caractérisé par le fait que les sels d'ammonium soutirés du procédé sont pelletisés ou granulés.

Fig.1

Fig.2